(19) Europäisches Patentamt
European Patent Office
Office européen des brevets

(11) Publication number: **0 055 765**
**B1**

# (12) EUROPEAN PATENT SPECIFICATION

(45) Date of publication of patent specification: **17.04.85**

(51) Int. Cl.$^4$: **C 08 L 9/06,** C 08 L 9/00, C 08 L 11/00

(21) Application number: **81902114.8**

(22) Date of filing: **06.07.81**

(86) International application number: **PCT/US81/00910**

(87) International publication number: **WO 82/00298 04.02.82 Gazette 82/04**

## (54) Pressure-sensitive adhesive compositions.

(30) Priority: **14.07.80 US 168507**

(43) Date of publication of application: **14.07.82 Bulletin 82/28**

(45) Publication of the grant of the patent: **17.04.85 Bulletin 85/16**

(84) Designated Contracting States: **DE FR GB NL**

(56) References cited:
**GB-A- 887 441**
**US-A-2 878 142**
**US-A-4 086 201**
**US-A-4 151 319**

**The file contains technical information submitted after the application was filed and not included in this specification**

(73) Proprietor: **MORGAN ADHESIVES COMPANY**
**4560 Darrow Road**
**Stow Ohio 44224 (US)**

(72) Inventor: **LAURENT, Jacques J.**
**22 Rue des Foulons**
**B-7400 Soignies (BE)**

(74) Representative: **Spencer, Graham Easdale et al**
**A.A. Thornton & Co Northumberland House**
**303-306, High Holborn**
**London WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

**Description**

The present invention relates to pressure-sensitive adhesive compositions.

Various types of pressure-sensitive adhesive are in widespread commercial use. Such adhesives remain in a fluid state indefinitely and provide very effective adhesion for many different types of paper or film products (including labels). This indefinite fluidity is desired in order that the adhesive will flow and achieve a bond to any substrate brought into association therewith, but because of their liquid or flowable nature, they have a high tendency to ooze out at the edge of laminates or stacks of paper or other products with which they are used for bonding.

Pressure-sensitive adhesives are often used for bonding labels or paper laminates, which are often cut (by guillotine cutting and/or die cutting, for example) which can result in undesirable oozing at the cut edges.

If adjacent sheets are stuck together, by adhesive at the edges of a plurality of stacked sheets, such adjacent sheets would move at the same time to a printing press and result in unusable scrap.

It is very desirable to avoid any edge ooze of the adhesive and, to this end, various safeguards are operated. Thus, the cutting blades are kept very sharp and usually a silicone coating is applied to the cutting blade. Furthermore, adhesive bleed or ooze normally can be overcome by bevelling the leading and trailing edges of the sheets at a 45° angle and then rubbing the edges with a cloth bag filled with powder, such as zinc stearate that fixes itself to any adhesive at the edge and renders it non-tacky. The paper is generally cut at the lowest possible pressure and the maximum number of sheets cut at one time is usually about 100. Hence, the converting and cutting of the pressure-sensitive adhesive laminates is a difficult process and it is hard to maintain the end product in its most desirable, usable condition.

Heretofore, silicones, because of their low surface tensions, have been known and used for many years as release agents for coating on backing papers of pressure-sensitive adhesive laminate materials. These silicones normally are considered as being incompatible with the adhesives.

Pressure-sensitive adhesives are known which comprise an elastomer, a tackifying material and a silicone polymer. An example of such a composition is disclosed in U.S. Patent 4151319, in which the purpose of adding the silicone is to decrease the "zero minute peel value" (that is, the peel strength in a specified test procedure very shortly after application). A very broad definition of silicone polymers suitable for this purpose is given in the above-mentioned U.S. patent, among which specific examples are various siloxane-oxyalkylene block and graft polymers and phenyl methyl dimethyl polysiloxanes.

We have now found that a very restricted class of relatively low molecular weight silicones falling within the above-mentioned broad definition result in an unexpected property, namely, reduced edge ooze.

According to the present invention, therefore, there is provided a pressure-sensitive adhesive composition which comprises a synthetic rubber, at least one tackifier, and a silicone in an amount of 6 to 10% based on the weight of solids in the composition, the silicone having a viscosity of from $2\times10^{-5}m^2.s^{-1}$ (20 centistokes) to $3.5\times10^{-4}m^2s^{-1}$ (350 centistokes) at 25°C and being represented by the following formula:

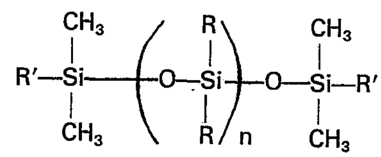

in which R is methyl, phenyl, vinyl or hydrogen, R' is methyl or hydroxyl and n is in the range 16 to 150.

The compositions according to the invention have, as indicated, reduced tendency to edge oozing, such as might occur on guillotine cutting or drill punch pressing or cutting of laminates bonded therewith. Punching of sheets bonded with or carrying such pressure-sensitive adhesive compositions can be effected without clogging of the punching device.

In the silicone used in the composition according to the invention, n is preferably at least 135. The molecular weight of the silicone is preferably in the range 10,000 to 11,000. Such silicones are known silicone fluids or oils.

As mentioned, the silicone is present in an amount of 6 to 10% (typically about 8%) based on the weight of solids (that is, non-volatile materials).

The silicone may contain active sites such as silicon-bonded hydroxyl, vinyl or hydrogen groups; such active sites may, if desired, be grafted to other components present in the composition. The silicone should be non-volatile (in order to avoid striking through absorbent facing materials). For this reason the silicone used according to the invention generally has a viscosity greater than $2\times10^{-5}m^2.s^{-1}$ (20 centistokes) at 25°C.

The composition according to the invention is preferably in a solvent-based system (that is, present in a solvent for the rubber). However, the compositions according to the invention may also be in the form of hot melt, water based, and U.V. cured pressure-sensitive adhesives.

A typical composition according to the invention is as follows:

| Ingredient | Parts |
|---|---|
| Hexane | 56.51 |
| Toluene | 14.37 |
| SBR Rubber | 9.96 |
| IR Rubber | 1.74 |
| Tackifier 1 | 11.70 |
| Tackifier 2 | 2.31 |
| Processing aid oil | 0.84 |
| Antioxidant | 0.50 |
| Polydimethylsiloxane oil | 2.17 |
| | 100.00 |

Total solids=29.22%

$$\text{Ratio} \frac{\text{Silicone additive}}{\text{Other solid ingredients}} = \frac{2.17}{27.05} = 0.080$$

In the above formulation, Tackifier 1 comprises Staybelite Ester #10 which is a glycerol ester of rosin and Tackifier 2 comprises Cellolyn 21, which is a phthalate ester of technical hydroabietyl alcohol. Both of these tackifiers are products of Hercules, Inc. (Staybelite and Celloyln are both trade marks).

The processing aid oil used was Circolight oil made by the Sun Oil Company. The antioxidant was 2,2'isobutyldiene bis (4,6 dimethyl-phenol) product which is marketed by Bayer under the trade mark Vulkanox NKF. (Of course any other hindered phenolic antioxidant known to be non-staining and non-volatile could be used instead).

While not impairing the action of the pressure-sensitive adhesive, the silicone reduced edge ooze or flow of the adhesive when on sheets subjected to a cutting or shearing action.

In mixing the composition of the invention, no special precautions or actions are required and the adhesive formulation can be prepared in a conventional manner. Normally, the silicone additive is just mixed in with the other ingredients when dissolving the rubber and other materials into the solvents used.

**Claims**

1. A pressure-sensitive adhesive composition which comprises a synthetic rubber, at least one tackifier, and a silicone in an amount of 6 to 10% based on the weight of solids in the composition, the silicone having a viscosity of from $2\times10^{-5}m^2.s^{-1}$ (20 centistokes) to $3.5\times10^{-4}m^2s^{-1}$ (350 centistokes) at 25°C and being represented by the following formula:

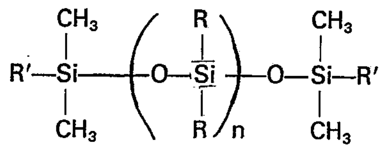

in which R is methyl, phenyl, vinyl or hydrogen, R' is methyl or hydroxyl and n is the range 16 to 150.

2. A composition according to claim 1, in which n is at least 135.

3. A composition according to claim 1, in which the silicone has a molecular weight of 10,000 to 11,000.

4. A composition according to any of claims 1 to 3 in which the silicone is a poly-dimethyl siloxane oil.

5. A formulation which comprises an adhesive composition according to any of claims 1 to 4, dispersed in a solvent for the rubber.

6. A composition according to any of claims 1 to 4, which is in the form of an adhesive coating.

**Patentansprüche**

1. Druckempfindliche Klebstoffzusammensetzung, umfassend einen synthetischen Gummi, mindestens einen Klebrigmacher und ein Silikon in einer Menge von 6 bis 10 %, bezogen auf das Gewicht der Feststoffe in der Zusammensetzung, wobei das Silikon eine Viskosität von $2.10^{-5}m^2.s^{-1}$ (20 Centistokes) bis $3{,}5.10^{-4}m^2.s^{-1}$ (350 Centistokes) bei 25°C besitzt und der folgenden Formel entspricht:

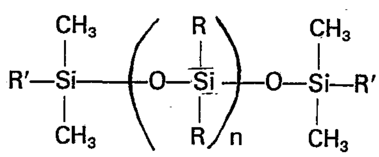

worin

R Methyl, Phenyl, Vinyl oder Wasserstoff,
R' Methyl oder Hydroxyl bedeuten und
n im Bereich von 16 bis 150 liegt.

2. Zusammensetzung nach Anspruch 1, dadurch gekennzeichnet, daß n mindestens 135 beträgt.

3. Zusammensetzung nach Anspruch 1, dadurch gekennzeichnet, daß das Silikon ein Molekulargewicht von 10 000 bis 11 000 besitzt.

4. Zusammensetzung nach mindestens einem der Ansprüche 1 bis 3, dadurch gekennzeichnet, daß das Silikon ein Polydimethylsilikon-Öl ist.

5. Zubereitung, umfassend eine Klebstoffzusammensetzung nach mindestens einem der Ansprüche 1 bis 4, dispergiert in einem Lösungsmittel für den Gummi.

6. Zusammensetzung nach mindestens einem der Ansprüche 1 bis 4, dadurch gekennzeichnet, daß sie in Form einer Klebstoffbeschichtung vorliegt.

**Revendications**

1. Une composition adhésive sensible à la

pression qui comprend un caoutchouc synthétique, au moins un agent d'adhérence et une silicone en quantité de 6 à 10 % par rapport au poids des solides de la composition, la silicone ayant une viscosité de $2.10^{-5}$ à $3,5.10^{-4} m^2 s^{-1}$ (20 à 350 centistokes) à 25°C et étant représentée par la formule suivante:

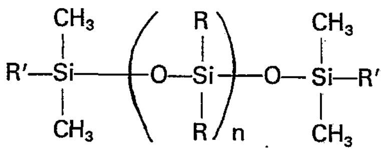

dans laquelle R est un groupe méthyle, phényle, vinyle ou un atome d'hydrogène, R' est un groupe méthyle ou hydroxyle et n est dans la gamme de 16 à 150.

2. Une composition selon la revendication 1 dans laquelle n est au moins égal à 135.

3. Une composition selon la revendication 1 dans laquelle la silicone a un poids moléculaire de 10 000 à 11 000.

4. Une composition selon l'une quelconque des revendications 1 à 3, dans laquelle la silicone est une huile de polydiméthylsilicone.

5. Une formulation qui comprend une composition adhésive selon l'une quelconque des revendications 1 à 4, dispersée dans un solvant pour le catouchouc.

6. Une composition selon l'une quelconque des revendications 1 à 4 qui est sous la forme d'une revêtement adhésif.